# EUROPEAN PATENT APPLICATION

(11) **EP 2 884 625 A1**
(43) Date of publication of application: **17.06.2015**
(21) Application number: 13828467.4
(22) Date of filing: 10.07.2013
(51) Int. Cl.: H02J 17/00, H01F 38/14

(54) **CONTACTLESS POWER TRANSMISSION DEVICE**

(30) Priority: 10.08.2012 JP 2012178016
(71) Applicant: Panasonic Intellectual Property Management Co., Ltd., Osaka-shi, Osaka 540-6207 (JP)
(72) Inventor: KITAMURA, Hiroyasu, Osaka 540-6207 (JP); SUZUKI, Mami, Osaka 540-6207 (JP); OHBA, Takafumi, Osaka 540-6207 (JP)
(74) Representative: Grünecker Patent- und Rechtsanwälte PartG mbB
(86) International application number: PCT/JP2013/004279
(87) International publication number: WO 2014/024380

(57) **Abstract**

A contactless power transmission device (1) is provided with: a washstand (10) that includes a primary coil (24); and an electric toothbrush (30) that includes a secondary coil (41), a rectifier circuit (42), and a feed control unit (43). The electric toothbrush (30) includes a first auxiliary coil (45) which relays a magnetic flux which flows from the primary coil (24) to the secondary coil (41), and a second auxiliary coil (47) which relays a magnetic flux which flows from the primary coil (24) to the secondary coil (41). A central axis (J12) of the second auxiliary coil (47) is perpendicular to a central axis (J11) of the first auxiliary coil (45).

## Description

The present invention relates to a contactless power transmission device that includes a power transmitter, which includes a primary coil, and a power receiver, which includes a secondary coil.

A conventional contactless power transmission device interlinks the magnetic flux of a primary coil with a secondary coil to transmit power from a power transmitter to a power receiver. Such a contactless power transmission device supplies current from the secondary coil to a power supply circuit to charge a rechargeable battery. Patent document 1 shows one example of the structure of a conventional contactless power transmission device.

Patent Document 1: Japanese Patent No. 3416863

In a contactless power transmission device, it is desired that the transmission distance be extended. However, the contactless power transmission device of patent document 1 does not particularly consider extending the transmission distance.

It is an object of the present invention to provide a contactless power transmission device that can extend the transmission distance.

One aspect of the present invention is a contactless power transmission device. The contactless power transmission device includes a power transmitter that includes a primary coil and a power receiver that includes a secondary coil and a power supply circuit electrically connected to the secondary coil. The power receiver includes a first auxiliary coil that relays magnetic flux flowing from the primary coil to the secondary coil, and a second auxiliary coil that is separate from the first auxiliary coil and relays magnetic flux flowing from the primary coil to the secondary coil. The second auxiliary coil is located where a center axis of the second auxiliary coil is inclined relative to a center axis of the first auxiliary coil or skew relative to the center axis of the first auxiliary coil.

Preferably, in the contactless power transmission device, the first auxiliary coil is not electrically connected to the secondary coil and the power supply circuit, and the second auxiliary coil is not electrically connected to the secondary coil, the power supply circuit, and the first auxiliary coil.

Preferably, in the contactless power transmission device, at least one of the secondary coil, the first auxiliary coil, and the second auxiliary coil includes a hollow portion and a core that is located in the hollow portion and formed by a magnetic material.

Preferably, in the contactless power transmission device, one of the first auxiliary coil and the second auxiliary coil includes a wire that is wound around the core, and the other of the first auxiliary coil and the second auxiliary coil includes a planar coil.

Preferably, in the contactless power transmission device, the core includes a first projection and a second projection having a center axis located at a position that is inclined relative to a center axis of the first projection or skew relative to the center axis of the first projection. The first auxiliary coil includes a first wire that is wound around the first projection, and the second auxiliary coil includes a second wire that is wound around the second projection.

Preferably, in the contactless power transmission device, the core includes a central portion, a first projection formed extending from the central portion, and a second projection formed extending from the central portion to have a center axis that is deviated from an axis parallel to a center axis of the first projection.

Preferably, in the contactless power transmission device, the first auxiliary coil and the second auxiliary coil include planar coils.

Preferably, in the contactless power transmission device, at least one of the first auxiliary coil and the second auxiliary coil includes a curved coil that is formed by bending a planar coil to have a curved surface.

Preferably, in the contactless power transmission device, at least one of the first auxiliary coil and the second auxiliary coil includes a conductive pattern that is formed on a circuit board.

Preferably, in the contactless power transmission device, the power supply circuit is formed on the circuit board.

Preferably, in the contactless power transmission device, one of a center axis of the first auxiliary coil and a center axis of the second auxiliary coil is coaxial to a center axis of the secondary coil.

A contactless power transmission device can extend the transmission distance.

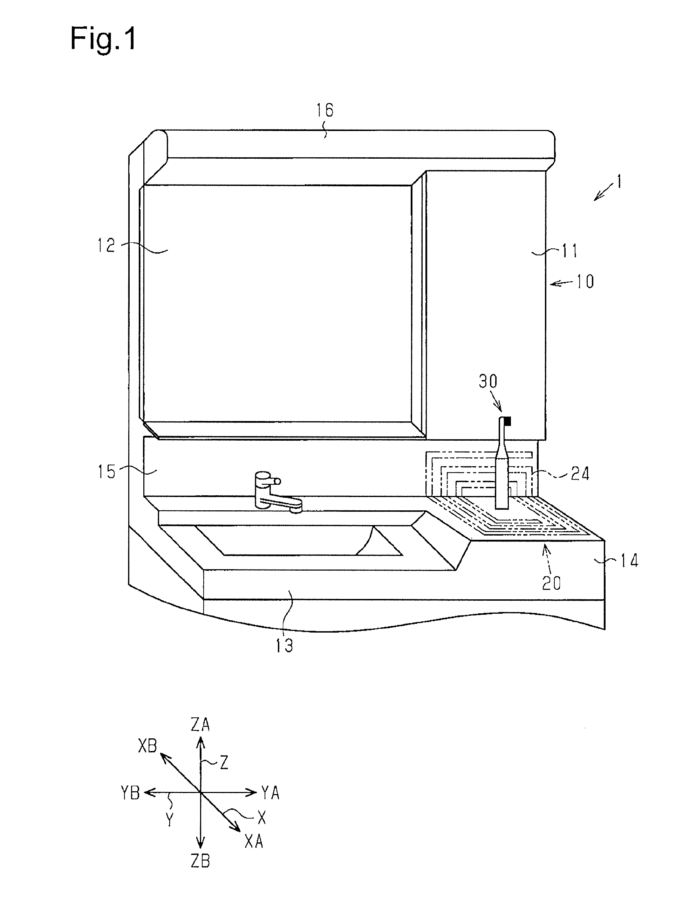

Fig. 1 is a perspective view showing a perspective structure of a first embodiment of a contactless power transmission device.

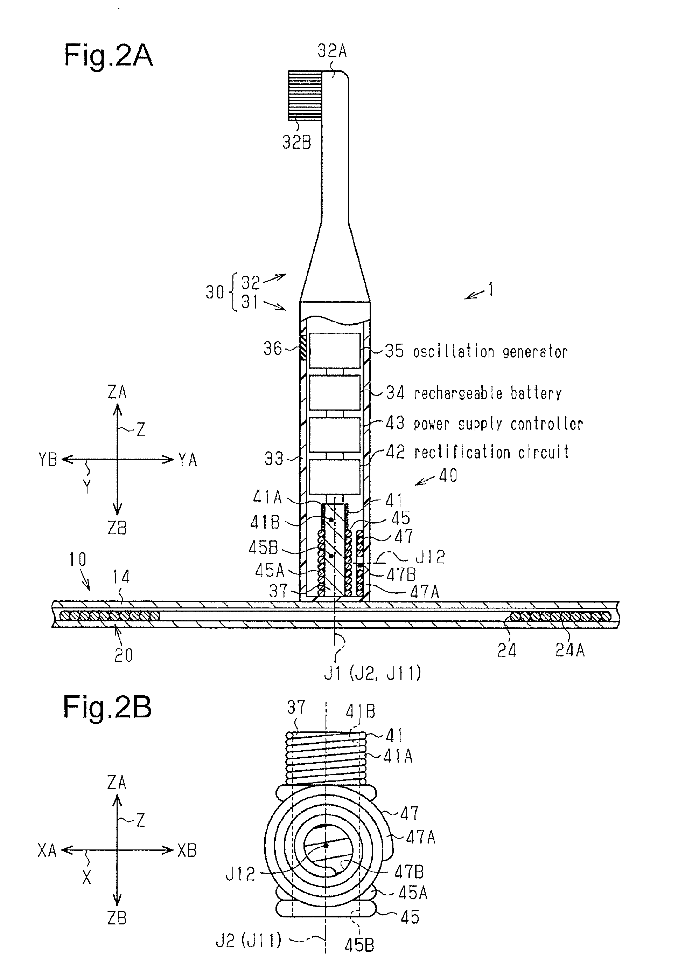

Fig. 2 includes views related to the first embodiment of the contactless power transmission device, where Fig. 2A is a cross-sectional view showing the cross-sectional structure of a portion of a washstand and a partial cross-sectional structure of an electric toothbrush, and Fig. 2B is a front view showing a front structure of a secondary coil, a first auxiliary coil, and a second auxiliary coil of the electric toothbrush.

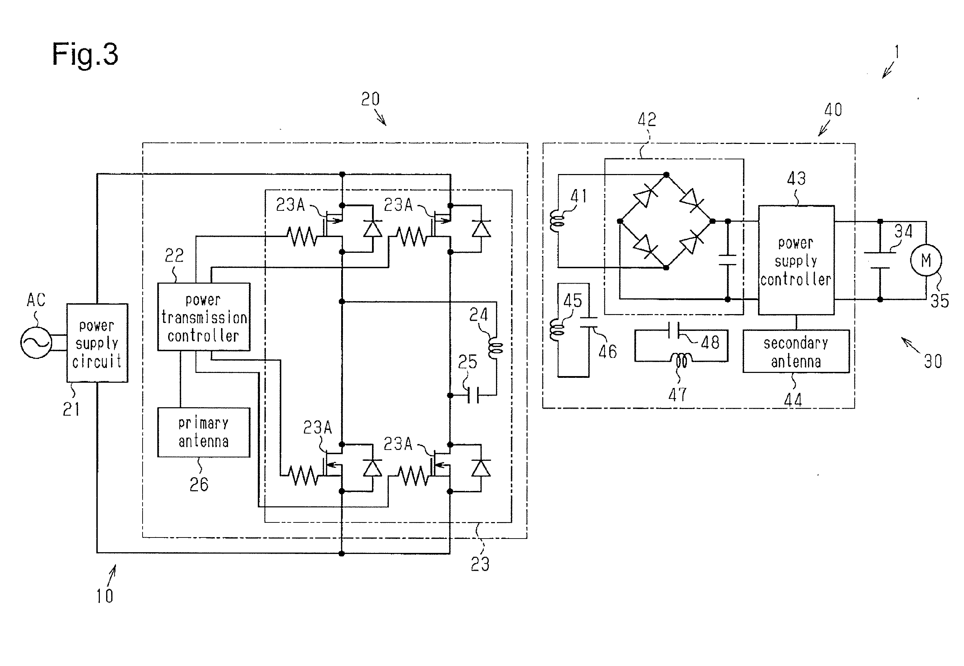

Fig. 3 is a circuit diagram showing a circuit configuration of the first embodiment of the contactless power transmission device.

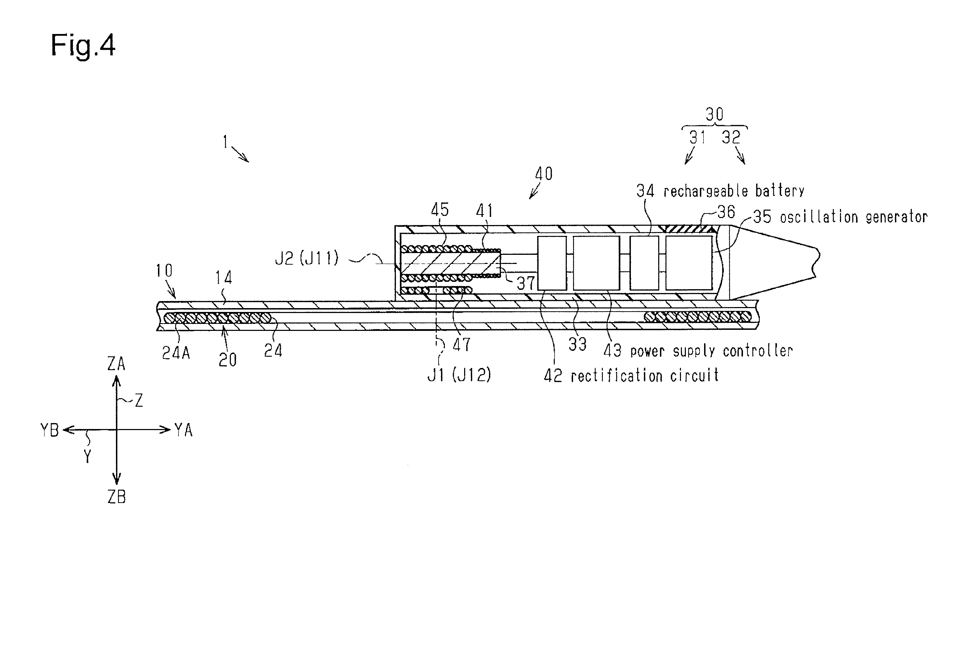

Fig. 4 is a diagram related to the first embodiment of the contactless power transmission device, and is a cross-sectional view showing a cross-sectional structure of portions of the washstand and the electric toothbrush.

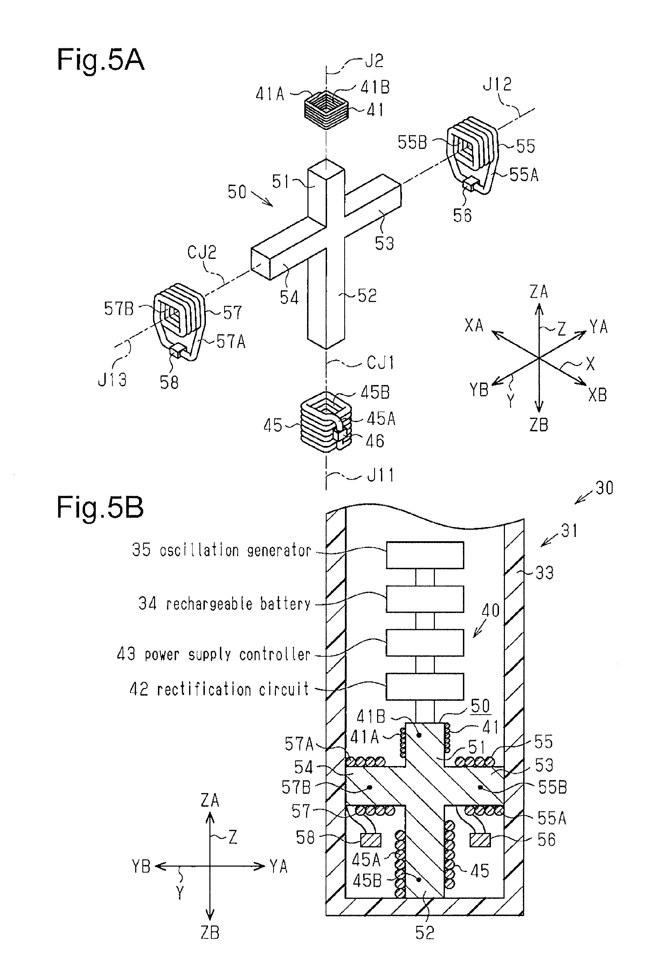

Fig. 5 includes diagrams related to a second embodiment of the contactless power transmission device, where Fig. 5A is a perspective view showing an exploded perspective structure of a core, a secondary coil, and first to third auxiliary coils, and Fig. 5B is a partial cross-sectional view showing a cross-sectional structure of an electric toothbrush.

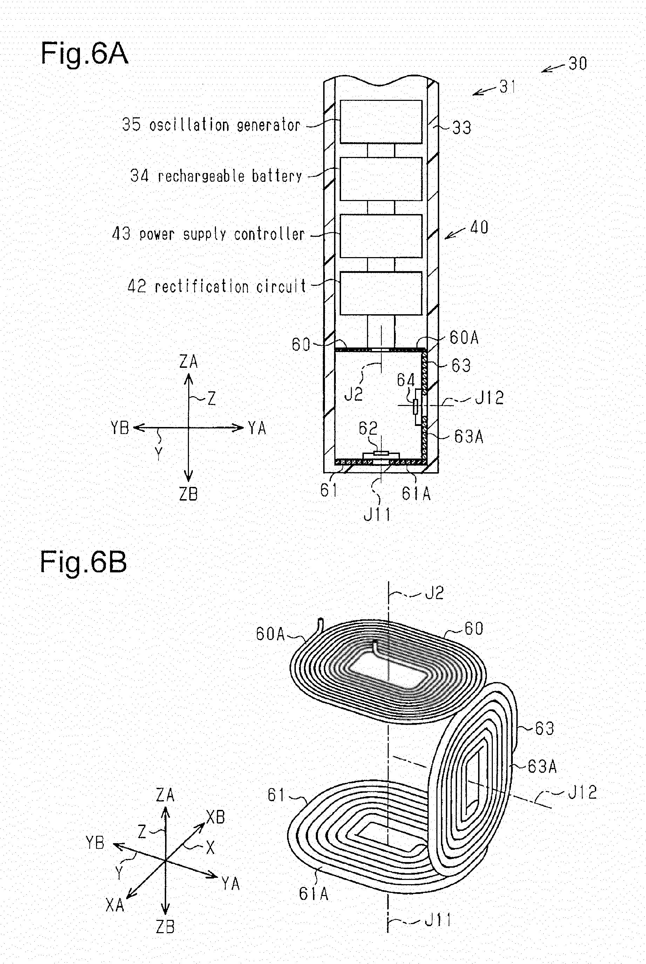

Fig. 6 includes diagrams related to a third embodiment of the contactless power transmission device, where Fig. 6A is a partial cross-sectional view showing a cross-sectional structure of an electric toothbrush, and Fig. 6B is a perspective view showing a perspective structure of a secondary coil, a first auxiliary coil, and a second auxiliary coil.

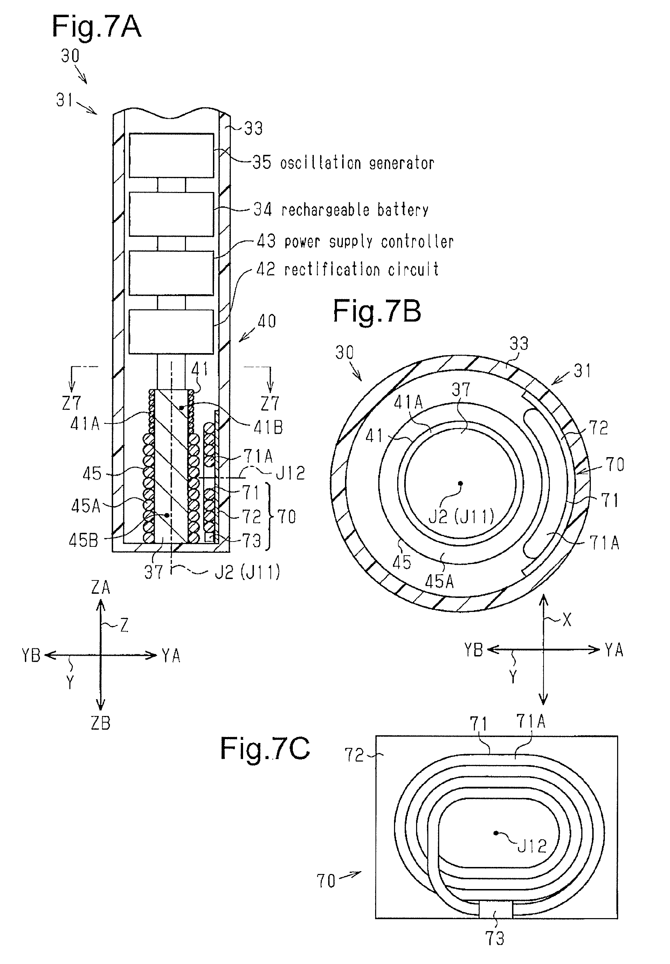

Fig. 7 includes diagrams related to a fourth embodiment of the contactless power transmission device, where Fig. 7A is a partial cross-sectional view showing a cross-sectional structure of an electric toothbrush, Fig. 7B is a cross-sectional view showing a cross-sectional structure taken along plane Z7-Z7, and Fig. 7C is a rear view showing a rear structure of a second auxiliary coil.

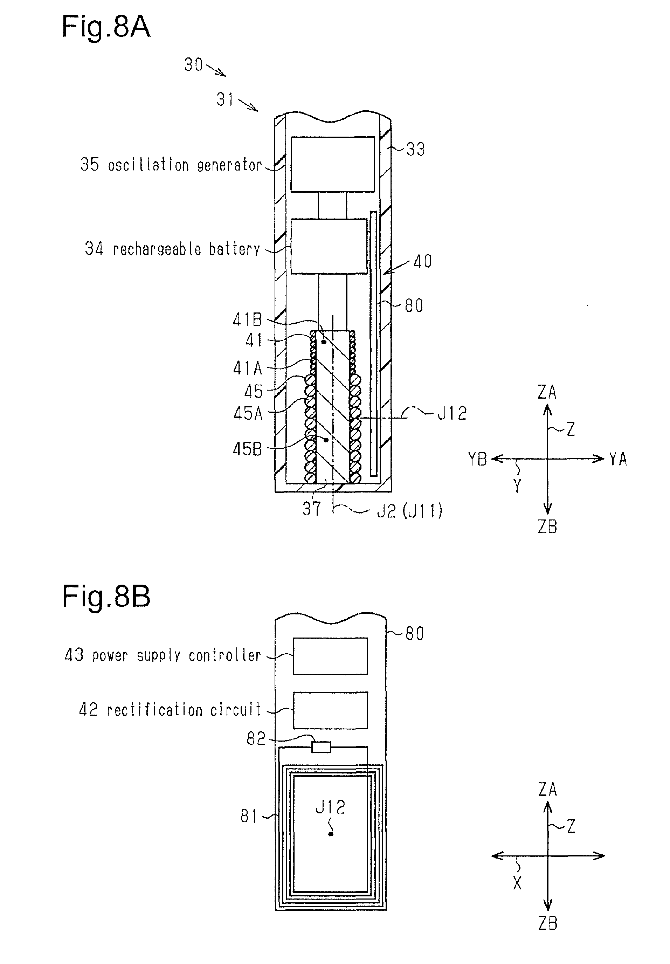

Fig. 8 includes diagrams related to a fifth embodiment of a contactless power transmission device, where Fig. 8A is a partial cross-sectional view showing a cross-sectional structure of an electric toothbrush, and Fig. 8B is a rear view showing a rear structure of a circuit board of the electric toothbrush.

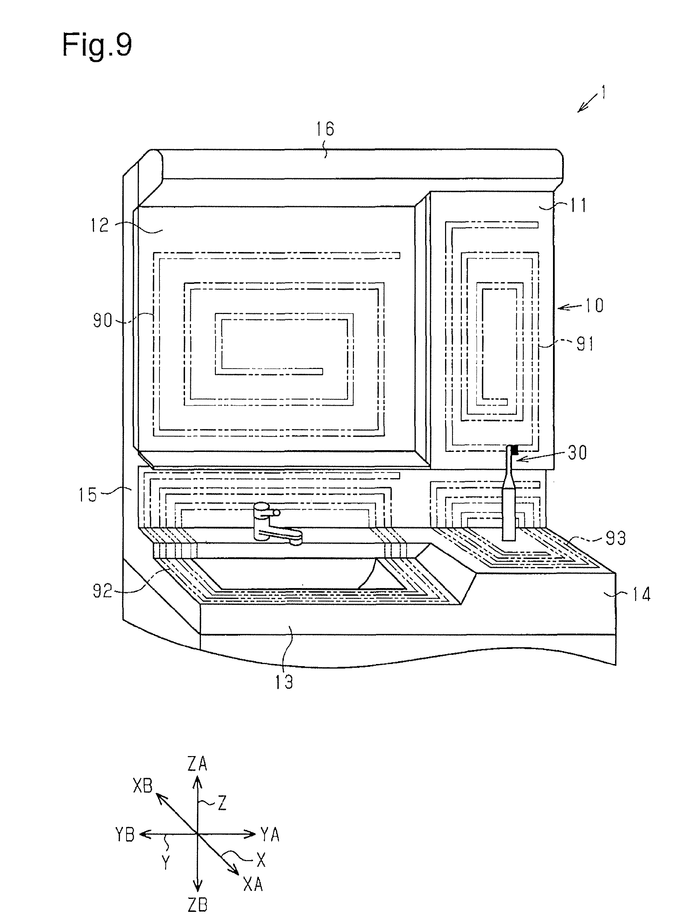

Fig. 9 is a perspective view showing a perspective structure of a sixth embodiment of the contactless power transmission device.

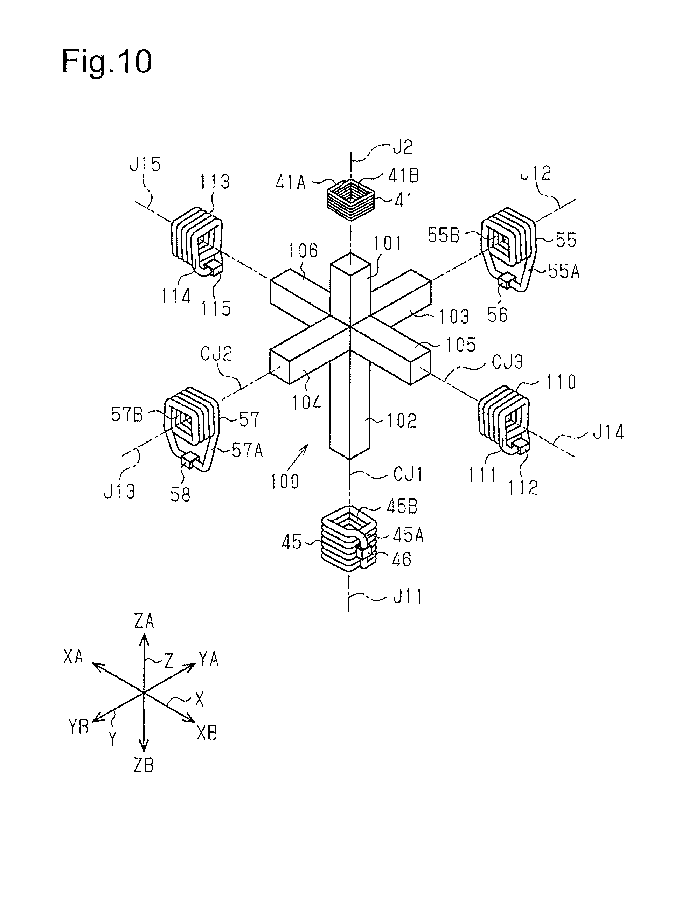

Fig. 10 is a perspective view showing an exploded perspective structure of a core, a secondary coil, and first to fourth auxiliary coils of another embodiment of a contactless power transmission device.

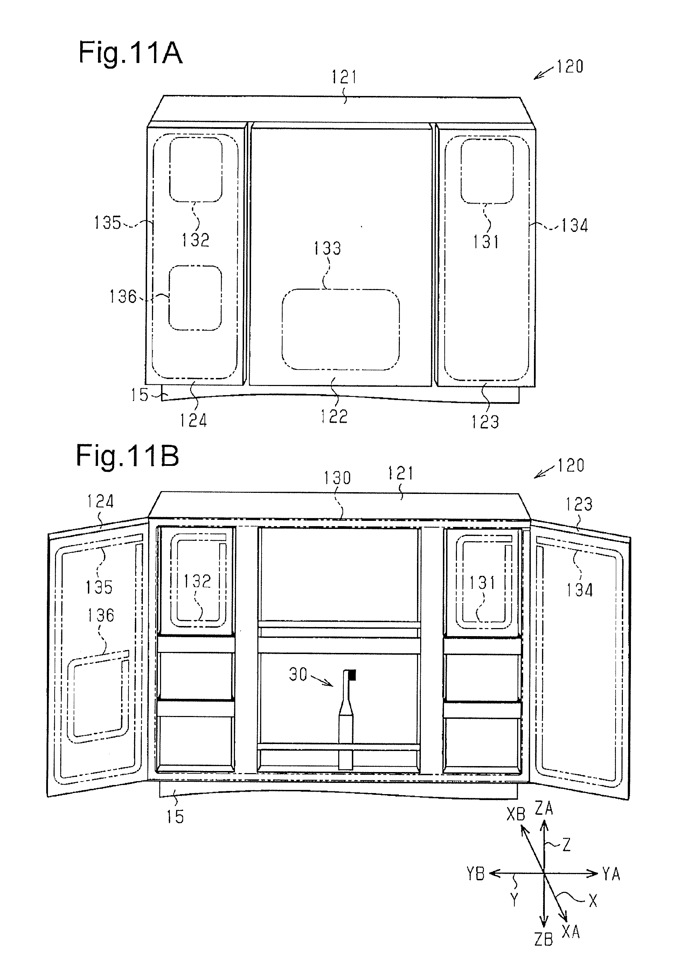

Fig. 11 includes diagrams related to another embodiment of a contactless power transmission device, where Fig. 11A is a perspective view showing a perspective structure of the device when doors are closed, and Fig. 11B is a perspective view showing a perspective structure of the device when the doors are open.

### First Embodiment

Directions of a contactless power transmission device 1 are defined as follows.
(A) The Z-direction is the vertical direction.
(B) The Y-direction is orthogonal to the Z-direction when the contactless power transmission device 1 is viewed from the front.
(C) The X-direction is orthogonal to the Z-direction when the contactless power transmission device 1 is viewed from the side.
(D) The forward direction XA lies along the X-direction and extends from a rear surface toward a front surface of the contactless power transmission device 1.
(E) The rearward direction XB lies along the X-direction and extends from the front surface toward the rear surface of the contactless power transmission device 1.
(F) The upward direction ZA lies along the vertical direction and extends from a lower side toward an upper side.
(G) The downward direction ZB lies along the vertical direction and extends from the upper side toward the lower side.
(H) The rightward direction YA extends from a left surface toward a right surface of the contactless power transmission device 1 as viewed from the front.
(I) The leftward direction YB extends from the right surface toward the left surface of the contactless power transmission device 1 as viewed from the front.

The structure of the contactless power transmission device 1 will now be described with reference to Figs. 1 and 2. Fig. 1 illustrates a simplified form of a primary coil 24; thus, the illustrated number of windings of the primary coil 24 is less than the actual number of windings.

The contactless power transmission device 1 includes a washstand 10 and an electric toothbrush 30. When the electric toothbrush 30 is set on a portion of the washstand 10, the washstand 10 transmits power to the electric toothbrush 30. The washstand 10 corresponds to "the power transmitter". The electric toothbrush 30 corresponds to "the power receiver".

As shown in Fig. 1, the washstand 10 includes a right mirror portion 11, a left mirror portion 12, a sink 13, a seat 14, a support board 15, a lighting device 16, and a primary circuit 20.

The right mirror portion 11 is located in a region of the washstand 10 that extends in the upward direction ZA and the rightward direction YA. The left mirror portion 12 is located in a region of the washstand 10 that extends in the upward direction ZA and the leftward direction YB. The sink 13 is located in a region of the washstand 10 that extends in the downward direction ZB and the leftward direction YB. The seat 14 is located in a region of the washstand 10 that extends in the downward direction ZB and the rightward direction YA. That is, the seat 14 is located adjacent to the sink 13. The primary circuit 20 is embedded in the seat 14. The primary circuit 20 includes the primary coil 24. When the electric toothbrush 30 is placed on the seat 14, the primary circuit 20 supplies power to the electric toothbrush 30 with the primary coil 24. The support board 15 is located above the sink 13 and the seat 14. A central portion of the support board 15 supports the right mirror portion 11 and the left mirror portion 12. The lighting device 16 is supported by an end portion of the support board 15 that is opposed to the sink 13 and the seat 14.

The structure of the electric toothbrush 30 will now be described with reference to Fig. 2.

As shown in Fig. 2A, the electric toothbrush 30 is set in an upright position on the seat 14. The electric toothbrush 30 includes a device main body 31 and a cleaning component 32.

The cleaning component 32 can be attached to and removed from the device main body 31. The cleaning component 32 includes a bristle base 32A, which is located on the end opposite to the end that is attachable to the device main body 31, and a bristle bundle 32B, which is fixed to the bristle base 32A.

The device main body 31 includes a main body case 33 that accommodates a rechargeable battery 34, an oscillation generator 35, a core 37, and the secondary circuit 40. A power switch 36 is coupled to the main body case 33.

The main body case 33 is formed from a non-conductive resin material. The main body case 33 is tubular and extends in the Z-direction.

The oscillation generator 35 includes an electric motor and an eccentric weight that is coupled to an output shaft of the electric motor. The electric motor rotates the eccentric weight to oscillate the oscillation generator 35. The oscillation of the oscillation generator 35 is transmitted through the device main body 31 to the cleaning component 32.

Power is supplied to the oscillation generator 35 from the rechargeable battery 34 when the power switch 36 is operated by a user. More specifically, when the power switch 36 is switched on, power is supplied from the rechargeable battery 34 to the oscillation generator 35. When the power switch 36 is switched off, the oscillation generator 35 is not supplied with power from the rechargeable battery 34.

The core 37 is formed by a magnetic material, such as ferrite. The core 37 has a cylindrical rod-like shape and extends in the Z-direction. The core 37 is located at a lower end portion of the device main body 31.

The secondary circuit 40 includes a secondary coil 41, a first auxiliary coil 45, and a second auxiliary coil 47.

The secondary coil 41 is formed by a rod-like coil in which a wire 41 A is wound around an upper end portion of the core 37. That is, the core 37 is located in a hollow portion 41B of the secondary coil 41. The secondary coil 41 includes the wire 41A, which is stacked in the Z-direction. The secondary coil 41 is located in the upward direction ZA from the first auxiliary coil 45 and the second auxiliary coil 47. The secondary coil 41 interlinks at least one of the first auxiliary coil 45 and the second auxiliary coil 47.

The first auxiliary coil 45 includes a rod-like coil in which a wire 45A is wound around a lower end portion of the core 37. That is, the core 37 is located in a hollow portion 45B of the first auxiliary coil 45. The first auxiliary coil 45 includes the wire 45A, which is stacked in the Z-direction. The first auxiliary coil 45 is located at the lower end portion of the device main body 31. Two ends of the wire 45A are connected to a capacitor 46 (refer to Fig. 3). The first auxiliary coil 45 is interlinked with the primary coil 24.

The second auxiliary coil 47 includes a planar coil in which a wire 47A is parallel to a plane (hereafter, XZ plane) that is defined by the X-direction and the Z-direction (refer to Fig. 2B). The wire 47A of the second auxiliary coil 47 is spirally wound. The second auxiliary coil 47 is located at the lower end portion of the device main body 31 and adjacent to the first auxiliary coil 45. Two ends of the wire 47A of the second auxiliary coil 47 are connected to a capacitor 48 (refer to Fig. 3). The second auxiliary coil 47 is interlinked with the primary coil 24. A hollow portion 47B of the second auxiliary coil 47 is free from a core formed by a magnetic material (not shown).

The relationships of the coils 24, 41, 45, and 47 will now be described.
(A) The wire 24A of the primary coil 24 has a larger diameter than the wire 41 A of the secondary coil 41, the wire 45A of the first auxiliary coil 45, and the wire 47A of the second auxiliary coil 47.
(B) The wire 41A of the secondary coil 41 has a smaller diameter than the wire 45A of the first auxiliary coil 45 and the wire 47A of the second auxiliary coil 47.
(C) The wire 45A of the first auxiliary coil 45 has the same diameter as the wire 47A of the second auxiliary coil 47.
(D) The primary coil 24 has the same number of windings as the secondary coil 41.
(E) The first auxiliary coil 45 has a larger number of windings than the primary coil 24.
(F) A center axis J11 of the first auxiliary coil 45 is coaxial to a center axis J2 of the secondary coil 41.
(G) The center axis J11 of the first auxiliary coil 45 is parallel to a center axis J1 of the primary coil 24.
(H) A center axis J12 of the second auxiliary coil 47 is orthogonal to the center axis J11 of the first auxiliary coil 45.
(I) The center axis J12 of the second auxiliary coil 47 is orthogonal to the center axis J1 of the primary coil 24.

The coils 24, 41, and 45 have relationships (A), (B), (D), and (E). Thus, the Q factor of the first auxiliary coil 45 is greater than that of the secondary coil 41. Additionally, the coupling coefficient (hereafter, power reception coupling coefficient) of the secondary coil 41 and the first auxiliary coil 45 that have relationship (F) is greater than the power reception coupling coefficient of the secondary coil 41 and the first auxiliary coil 45 that do not have relationship (F).

The operation of the electric toothbrush 30 will now be described.

A user switches on the power switch 36. This starts supplying power from the rechargeable battery 34 to the oscillation generator 35. When power is supplied from the rechargeable battery 34, the oscillation generator 35 oscillates the cleaning component 32. This oscillates the bristle bundle 32B. The user applies the bristle bundle 32B to a tooth surface in the mouth to clean the tooth surface.

The user switches off the power switch 36 after cleaning the tooth surface. This stops the supply of power from the rechargeable battery 34 to the oscillation generator 35. Consequently, the oscillation generator 35 stops operating.

The circuit configurations of the primary circuit 20 and the secondary circuit 40 will now be described with reference to Fig. 3.

The primary circuit 20 includes a power supply circuit 21, a power transmission controller 22, a transmission circuit 23, the primary coil 24, a capacitor 25, and a primary antenna 26. The primary coil 24 and the capacitor 25 are connected in series to form a resonance circuit that resonates at a reference frequency FK.

The power supply circuit 21 converts the alternating current power of a commercial AC power supply AC to direct current power.

The primary antenna 26 transmits and receives signals to and from a secondary antenna 44 of the secondary circuit 40 in a wireless manner.

The power transmission controller 22 transmits a voltage signal (hereafter, reply request signal) to the electric toothbrush 30 to request for a reply from the primary antenna 26 in predetermined cycles. The power transmission controller 22 provides the transmission circuit 23 with a control signal that is used to generate alternating current power supplied to the primary coil 24.

The transmission circuit 23 is connected to the power supply circuit 21, the power transmission controller 22, and the primary coil 24. The transmission circuit 23 includes four transistors 23A. The transmission circuit 23 switches the transistors 23A on and off to generate the alternating current power supplied to the primary coil 24 based on the control signal of the power transmission controller 22.

The secondary circuit 40 includes the secondary coil 41, a rectification circuit 42, a power supply controller 43, and the secondary antenna 44, the first auxiliary coil 45, the capacitor 46, the second auxiliary coil 47, and the capacitor 48. The rectification circuit 42, the power supply controller 43, and the secondary antenna 44 are located on a circuit board (not shown in the first embodiment).

The rectification circuit 42 includes a rectification bridge, which is formed by combining four diodes, and a capacitor that smoothes the current that has passed through the rectification bridge. The rectification circuit 42 is electrically connected to the secondary coil 41 and the power supply controller 43.

The power supply controller 43 includes a DC-DC converter (not shown) that controls the voltage of the direct current power, which has been rectified by the rectification circuit 42, and a transistor (not shown) that supplies and interrupts the supply of direct current power to the rechargeable battery 34. The power supply controller 43 is electrically connected to the rechargeable battery 34.

When receiving a reply request signal from the power transmission controller 22 with the secondary antenna 44, the power supply controller 43 transmits a voltage signal (hereafter, reply acknowledgement signal), which indicates the reception of the reply request signal, to the power transmission controller 22 from the secondary antenna 44. When receiving the reply acknowledgement signal, the power transmission controller 22 determines that the electric toothbrush 30 has been placed on the seat 14 of the washstand 10. Then, the power transmission controller 22 starts charging the rechargeable battery 34 with the primary circuit 20.

The first auxiliary coil 45 is connected to the capacitor 46 in series. The first auxiliary coil 45 and the capacitor 46 form a first resonance circuit. The capacitance of the capacitor 46 is set so that the resonance frequency of the first resonance circuit becomes the reference frequency FK.

The second auxiliary coil 47 is connected to the capacitor 48 in series. The second auxiliary coil 47 and the capacitor 48 form a second resonance circuit. The capacitance of the capacitor 48 is set so that the resonance frequency of the second resonance circuit becomes the reference frequency FK.

The control performed by the power supply controller 43 will now be described.

The power supply controller 43 performs voltage control and power supply control.

In the voltage control, the DC-DC converter changes the voltage of the direct current power in accordance with the state of charge of the rechargeable battery 34.

In the power supply control, the transistor remains activated as long as charging of the rechargeable battery 34 is not completed. That is, a condition in which the direct current power can be supplied to the rechargeable battery 34 is maintained. In the power supply control, when the rechargeable battery 34 is fully charged, the transistor is deactivated to stop supplying direct current power to the rechargeable battery 34.

The power supply operation and the effect of the contactless power transmission device 1 will now be described with reference to Figs. 2 to 4. Hereafter, as shown in Fig. 2, a condition in which the electric toothbrush 30 is held upright relative to the seat 14 of the washstand 10 is referred to as an upright condition. As shown in Fig. 4, a condition in which the electric toothbrush 30 is lying on the seat 14 is referred to as a horizontal condition. When the electric toothbrush 30 is in the horizontal condition, the center axis J12 of the second auxiliary coil 47 is parallel to the center axis J1 of the primary coil 24. Also, the center axis J2 of the secondary coil 41 and the center axis J11 of the first auxiliary coil 45 are orthogonal to the center axis J1 of the primary coil 24.

The power supply operation of the contactless power transmission device 1 will now be described when the electric toothbrush 30 is in the upright condition.
(A1) The power transmission controller 22 of the washstand 10 controls the transmission circuit 23 (refer to Fig. 3) to supply alternating current power having the reference frequency FK to the primary coil 24.
(A2) When the alternating current power is supplied to the primary coil 24, the primary coil 24 generates alternating current magnetic flux.
(A3) The first auxiliary coil 45 is interlinked with the alternating current magnetic flux of the primary coil 24 to generate the alternating current power, having the reference frequency FK, and the alternating current magnetic flux. The alternating current power and the alternating current magnetic flux, which are generated at the first auxiliary coil 45, are larger than those of a hypothetical structure in which the rectification circuit 42 and the power supply controller 43 are electrically connected to the first auxiliary coil 45.
(A4) The second auxiliary coil 47 is subtly interlinked with alternating current magnetic fluxes of the primary coil 24 and the first auxiliary coil 45.
(A5) The secondary coil 41 is interlinked with the alternating current magnetic flux of the first auxiliary coil 45 to generate alternating current power.
(A6) The rectification circuit 42 smoothes the alternating current power of the secondary coil 41 to generate direct current power.
(A7) The power supply controller 43 supplies the rechargeable battery 34 with the direct current power of the rectification circuit 42.

In this manner, in the contactless power transmission device 1, the first auxiliary coil 45 is interlinked with the alternating current magnetic flux of the primary coil 24, and the secondary coil 41 is interlinked with the alternating current magnetic flux of the first auxiliary coil 45. Thus, the first auxiliary coil 45 relays the magnetic flux to flow from the primary coil 24 to the secondary coil 41. This allows the contactless power transmission device 1 to have a greater transmission distance than that of a hypothetical structure in which the alternating current magnetic flux of the primary coil 24 directly interlinked with the secondary coil 41.

The power supply operation of the contactless power transmission device 1 when the electric toothbrush 30 is in the horizontal condition will now be described. The operation of the primary circuit 20 and the operations of the rectification circuit 42 and the power supply controller 43 of the secondary circuit 40 are the same as when the toothbrush 30 is in the upright condition and thus will not be described here.
(B1) The second auxiliary coil 47 is interlinked with the alternating current magnetic flux of the primary coil 24 to generate the alternating current power having the reference frequency FK and the alternating current magnetic flux. The alternating current power and the alternating current magnetic flux, which are generated at the second auxiliary coil 47, are larger than those of a hypothetical structure in which the second auxiliary coil 47 is electrically connected to the rectification circuit 42 and the power supply controller 43.
(B2) The first auxiliary coil 45 is subtly interlinked with the alternating current magnetic flux of the primary coil 24.
(B3) The secondary coil 41 is interlinked with the alternating current magnetic flux of the second auxiliary coil 47 to generate alternating current power.

In this manner, in the contactless power transmission device 1, power is supplied from the washstand 10 when the electric toothbrush 30 is in the upright condition and the horizontal condition. That is, in the contactless power transmission device 1, the power transmission directivity from the washstand 10 to the electric toothbrush 30 is weak compared to a structure that allows for power transmission from the washstand 10 to the electric toothbrush 30 only when the electric toothbrush 30 is in the upright condition. This increases the degree of freedom for the direction in which the electric toothbrush 30 is placed relative to the seat 14.

The contactless power transmission device 1 of the present embodiment has the advantages described below.
(1) The electric toothbrush 30 of the contactless power transmission device 1 includes the first auxiliary coil 45. In this structure, the contactless power transmission device 1 can extend the transmission distance compared to a hypothetical structure in which the primary coil 24 is directly interlinked with the secondary coil 41.
(2) The electric toothbrush 30 includes the second auxiliary coil 47 of which the center axis J12 is orthogonal to the center axis J11 of the first auxiliary coil 45. This structure allows power to be supplied from the primary circuit 20 to the secondary circuit 40 when the electric toothbrush 30 is in the upright condition and in the horizontal condition. This decreases the power transmission directivity from the washstand 10 to the electric toothbrush 30.
(3) The first auxiliary coil 45 is not electrically connected to the rectification circuit 42 and the power supply controller 43. In this structure, the magnetic flux and the power of the first auxiliary coil 45, which are generated when the magnetic flux of the primary coil 24 is interlinked with the first auxiliary coil 45, are large compared to a hypothetical structure in which the first auxiliary coil 45 is electrically connected to at least one of the rectification circuit 42 and the power supply controller 43. Thus, the contactless power transmission device 1 increases the current of the secondary coil 41 when the magnetic flux of the first auxiliary coil 45 is interlinked with the secondary coil 41. Therefore, the transmission distance can be extended.
   The second auxiliary coil 47 is not electrically connected to the rectification circuit 42 and the power supply controller 43. In this structure, the magnetic flux and the power of the second auxiliary coil 47, which are generated when the magnetic flux of the primary coil 24 is interlinked with the second auxiliary coil 47, are large compared to a hypothetical structure in which the second auxiliary coil 47 is electrically connected to at least one of the rectification circuit 42 and the power supply controller 43. Thus, the contactless power transmission device 1 increases the current of the secondary coil 41 when the magnetic flux of the second auxiliary coil 47 is interlinked with the secondary coil 41. Therefore, the transmission distance can be extended.
(4) The second auxiliary coil 47 includes the planar coil that is parallel to the XZ plane. In this structure, the second auxiliary coil 47 has a small size in a direction orthogonal to the Z-direction compared to a hypothetical structure in which the second auxiliary coil 47 is a cylindrical coil formed by stacking a wire in the direction orthogonal to the Z-direction. This allows for enlargement of the main body case 33 to be limited in the direction orthogonal to the Z-direction.
(5) The first auxiliary coil 45 includes the rod-like coil formed by winding the wire 45A around the core 37. This structure decreases the leakage amount of the magnetic flux between the primary coil 24 and the first auxiliary coil 45 compared to a hypothetical structure that does not have the core 37 located in the hollow portion 45B of the first auxiliary coil 45.
(6) The secondary coil 41 is a rod-like coil formed by winding the wire 41 A around the core 37. This structure decreases the leakage amount of the magnetic flux between the first auxiliary coil 45 and the secondary coil 41 compared to a hypothetical structure that does not have the core 37 located in the hollow portion 41B of the secondary coil 41.
(7) The wire 45A of the first auxiliary coil 45 and the wire 41 A of the secondary coil 41 are wound around the same core 37. This structure reduces the number of components of the electric toothbrush 30 compared to a hypothetical structure in which the wire 45A and the wire 41A are wound around separate cores.
(8) The secondary coil 41 is coaxial to the first auxiliary coil 45. This structure increases the power reception coupling coefficient compared to a hypothetical structure in which the secondary coil 41 is not coaxial to the first auxiliary coil 45. Thus, the current of the secondary coil 41 generated by the first auxiliary coil 45 is increased.

### Second Embodiment

Fig. 5 shows the structure of a second embodiment of the contactless power transmission device 1. The contactless power transmission device 1 of the present embodiment mainly differs from the contactless power transmission device 1 of the first embodiment shown in Fig. 2 in the following point. The contactless power transmission device 1 includes a core 50, a second auxiliary coil 55, and a third auxiliary coil 57 instead of the core 37 and the second auxiliary coil 47. The differences from the contactless power transmission device 1 of the first embodiment will now be described in detail. The same reference numerals are given to those components that are identical to the first embodiment. The description of such components will be entirely or partially omitted.

As shown in Fig. 5A, the core 50 is formed by a magnetic material such as ferrite. The core 50 has the shape of a cross as viewed from the front. The core 50 includes an upper projection 51, a lower projection 52, a right projection 53, and a left projection 54. The upper projection 51, the lower projection 52, the right projection 53, and the left projection 54 are integrally formed from the same material. The upper projection 51, the lower projection 52, the right projection 53, and the left projection 54 each have the shape of a tetragonal post. In the core 50, a center axis CJ1 of the upper and lower projections 51 and 52 are orthogonal to a center axis CJ2 of the right and left projections 53 and 54. The lower projection 52 corresponds to "the first projection". The right and left projections 53 and 54 correspond to "the second projection".

A wire 41 A is wound around the upper projection 51 of the core 50 to form a secondary coil 41 as a rod-like coil. That is, the upper projection 51 of the core 50 is located in a hollow portion 41B of the secondary coil 41. The secondary coil 41 and a first auxiliary coil 45 are located at opposite sides of the central portion of the core 50 in the upward direction ZA.

The first auxiliary coil 45 includes a rod-like coil formed by winding a wire 45A around the lower projection 52 of the core 50. That is, the lower projection 52 of the core 50 is located in a hollow portion 45B of the first auxiliary coil 45.

A second auxiliary coil 55 includes a rod-like coil formed by winding a wire 55A around the right projection 53 of the core 50. That is, the right projection 53 of the core 50 is located in a hollow portion 55B of the second auxiliary coil 55. The second auxiliary coil 55 is not electrically connected to the secondary coil 41, the first auxiliary coil 45, a rectification circuit 42, and a power supply controller 43 (refer to Fig. 5B). The second auxiliary coil 55 includes the wire 55A, which is stacked in the Y-direction. A center axis J12 of the second auxiliary coil 55 is orthogonal to a center axis J2 of the secondary coil 41 and a center axis J11 of the first auxiliary coil 45.

A capacitor 56 is connected in series between two ends of the wire 55A. The second auxiliary coil 55 and the capacitor 56 form a second resonance circuit. The capacitance of the capacitor 56 is set so that the resonance frequency of the second resonance circuit becomes the reference frequency FK. The capacitor 56 is located in the downward direction ZB from the second auxiliary coil 55.

A third auxiliary coil 57 includes a rod-like coil formed by winding a wire 57A around the left projection 54 of the core 50. That is, the left projection 54 of the core 50 is located in a hollow portion 57B of the third auxiliary coil 57. The third auxiliary coil 57 is not electrically connected to the secondary coil 41, the first auxiliary coil 45, the rectification circuit 42, the power supply controller 43, and the second auxiliary coil 55. The third auxiliary coil 57 includes the wire 57A, which is stacked in the Y-direction. A center axis J13 of the third auxiliary coil 57 is orthogonal to the center axis J2 of the secondary coil 41 and the center axis J11 of the first auxiliary coil 45. The center axis J13 of the third auxiliary coil 57 is coaxial to the center axis J12 of the second auxiliary coil 55. The third auxiliary coil 57 corresponds to "the second auxiliary coil".

A capacitor 58 is connected to two ends of the wire 57A in series. The third auxiliary coil 57 and the capacitor 58 form a third resonance circuit. The capacitance of the capacitor 58 is set so that the resonance frequency of the third resonance circuit becomes the reference frequency FK. The capacitor 58 is located in the downward direction ZB from the third auxiliary coil 57.

The contactless power transmission device 1 of the present embodiment has the following advantages in addition to advantages (1) to (3) and (5) to (8) of the contactless power transmission device 1 of the first embodiment.
(9) The electric toothbrush 30 includes the third auxiliary coil 57, which is not electrically connected to the rectification circuit 42 and the power supply controller 43. In this structure, the magnetic flux and the power of the third auxiliary coil 57, which are generated when the magnetic flux of the primary coil 24 is interlinked with the third auxiliary coil 57, are large compared to a hypothetical structure in which the third auxiliary coil 57 is electrically connected to at least one of the rectification circuit 42 and the power supply controller 43. Thus, the contactless power transmission device 1 increases the current generated by the secondary coil 41 when the magnetic flux of the third auxiliary coil 57 is interlinked with the secondary coil 41. Therefore, the transmission distance can be extended.

Also, when the electric toothbrush 30 of the first embodiment is in the horizontal condition and the second auxiliary coil 47 is located in the upward direction ZA from the first auxiliary coil 45, the distance of the primary coil 24 and the second auxiliary coil 47 is large. Thus, when the magnetic flux of the primary coil 24 is interlinked with the second auxiliary coil 47, the second auxiliary coil 47 is interlinked with a small amount of the magnetic flux compared to when the electric toothbrush 30 is in the horizontal condition and the second auxiliary coil 47 is located in the downward direction ZB from the first auxiliary coil 45. This decreases the current generated at the secondary coil 41 by the second auxiliary coil 47.

In contrast, when the electric toothbrush 30 of the present embodiment is in the horizontal condition and the second auxiliary coil 47 is located in the upward direction ZAfrom the first auxiliary coil 45, the third auxiliary coil 57 is located in the downward direction ZB from the first auxiliary coil 45. Thus, when the electric toothbrush 30 is in the horizontal condition and the second auxiliary coil 47 is located in the upward direction ZA from the first auxiliary coil 45, the magnetic flux of the primary coil 24 is interlinked with the third auxiliary coil 57. This limits decreases in the current generated at the secondary coil 41.
(10) The electric toothbrush 30 includes the capacitor 56 located in a region in the downward direction ZB from the second auxiliary coil 47 and the capacitor 58 located in a region in the downward direction ZB from the third auxiliary coil 57. In this structure, the capacitors 56 and 58 are located in a main body case 33 in a space between the inner circumferential surface of the main body case 33 and the outer circumferential surface of the first auxiliary coil 45. This effectively uses the space in the main body case 33.
(11) The core 50 is integrally formed by the upper projection 51, the lower projection 52, the right projection 53, and the left projection 54 using the same material. In this structure, the number of components of the core 50 is less than that of a hypothetical structure in which at least one of the upper projection 51, the lower projection 52, the right projection 53, and the left projection 54 is separately formed.

### Third Embodiment

Fig. 6 shows a structure of a third embodiment of the contactless power transmission device 1. As shown in Fig. 2, the contactless power transmission device 1 of the first embodiment includes the core 37, the secondary coil 41, the first auxiliary coil 45, and the second auxiliary coil 47. The contactless power transmission device 1 of the third embodiment does not include the core 37. The contactless power transmission device 1 includes a secondary coil 60, a first auxiliary coil 61, and a second auxiliary coil 63. The differences between the first and third embodiments will now be described in detail. The same reference numerals are given to those components that are shared in the first and third embodiments. The description of such components will be entirely or partially omitted.

A main body case 33 of an electric toothbrush 30 is tetragonal and has rounded corners as viewed from above.

The secondary coil 60 is located in the upward direction ZA from a lower surface of a device main body 31 with a gap located in between. The secondary coil 60 is formed as a planar coil that is parallel to a plane (hereafter, XY plane) defined by the X-direction and the Y-direction. The secondary coil 60 is tetragonal and has rounded corners as viewed from above (refer to Fig. 6B). The secondary coil 60 includes a wire 60A, which is spirally wound.

A first auxiliary coil 61 is located at a lower end portion of the device main body 31. The first auxiliary coil 61 is not electrically connected to the secondary coil 60, the rectification circuit 42, and the power supply controller 43. The first auxiliary coil 61 includes a planar coil that is parallel to the XY plane. The first auxiliary coil 61 is tetragonal and has rounded corners as viewed from above (refer to Fig. 6B). The first auxiliary coil 61 includes a wire 61A, which is spirally wound. A center axis J11 of the first auxiliary coil 61 is coaxial to a center axis J2 of the secondary coil 60.

A capacitor 62 is connected in series between two ends of the wire 61 A. The capacitor 62 is located at an upper side of a wound portion of the wire 61 A. The first auxiliary coil 61 and the capacitor 62 form a first resonance circuit. The capacitance of the capacitor 62 is set sot that the resonance frequency of the first resonance circuit becomes the reference frequency FK.

A second auxiliary coil 63 includes a planar coil that is parallel to the XZ plane. The second auxiliary coil 63 is tetragonal with rounded corners as viewed from above (refer to Fig. 6B). The second auxiliary coil 63 includes a wire 63A, which is spirally wound. The second auxiliary coil 63 is not electrically connected to the secondary coil 60, the rectification circuit 42, the power supply controller 43, and the first auxiliary coil 61. A lower end portion of the second auxiliary coil 63 contacts an upper surface of circumferential portion of the first auxiliary coil 61. A center axis J12 of the second auxiliary coil 63 is orthogonal to the center axis J2 of the secondary coil 60 and the center axis J11 of the first auxiliary coil 61.

A capacitor 64 is connected in series between two ends of the wire 63A. The capacitor 64 is located at a left side of a wound portion of the wire 63A. The second auxiliary coil 63 and the capacitor 64 form a second resonance circuit. The capacitance of the capacitor 64 is set so that the resonance frequency of the second resonance circuit becomes the reference frequency FK.

The power supply operation of the contactless power transmission device 1 will now be described when the electric toothbrush 30 is in the upright condition. The operation of a primary circuit 20 (refer to Fig. 3) and the operation of the rectification circuit 42 and the power supply controller 43 of a secondary circuit 40 are the same as the power supply operation of the contactless power transmission device 1 of the first embodiment. Also, the power supply operation of the contactless power transmission device 1 is the same as that of the first embodiment when the electric toothbrush 30 is in the horizontal condition.
(C1) The first auxiliary coil 61 is interlinked with the alternating current magnetic flux of the primary coil 24 (refer to Fig. 2) to generate the alternating current power and the alternating current magnetic flux at the reference frequency FK. The alternating current power and the alternating current magnetic flux, which are generated at the first auxiliary coil 61, are larger than those of a hypothetical structure in which the rectification circuit 42, the power supply controller 43, and the first auxiliary coil 61 are electrically connected.
(C2) The second auxiliary coil 63 interlinks the alternating current magnetic flux of the first auxiliary coil 45 to generate the alternating current power and the alternating current magnetic flux at the reference frequency FK. The alternating current power and the alternating current magnetic flux, which are generated at the second auxiliary coil 63, are larger than those of a hypothetical structure in which the rectification circuit 42, the power supply controller 43, and the second auxiliary coil 63 are electrically connected.
(C3) The secondary coil 41 is interlinked with the alternating current magnetic flux of the second auxiliary coil 63 to generate alternating current power.

The contactless power transmission device 1 of the present embodiment has the following advantage in addition to advantages (1) to (4) and (8) of the contactless power transmission device 1 of the first embodiment.
(12) The second auxiliary coil 63 contacts the upper surface of the first auxiliary coil 61. In this structure, the coupling coefficient of the first and second auxiliary coils 61 and 63 is high compared to a hypothetical structure in which the second auxiliary coil 63 does not contact the first auxiliary coil 61.

### Fourth Embodiment

Fig. 7 shows the structure of a fourth embodiment of the contactless power transmission device 1. As shown in Fig. 2, the contactless power transmission device 1 of the first embodiment includes the second auxiliary coil 47. The contactless power transmission device 1 of the fourth embodiment includes a second auxiliary coil 70. The differences between the first and fourth embodiments will now be described in detail. The same reference numerals are given to those components that are shared in the first and fourth embodiments. The description of such components will be entirely or partially omitted.

A second auxiliary coil 70 is located at a lower end portion of a device main body 31 of an electric toothbrush 30. The second auxiliary coil 70 is adjacent to a first auxiliary coil 45. The second auxiliary coil 70 includes a planar coil 71, a flexible substrate 72, and a capacitor 73. The planar coil 71 and the capacitor 73 of the second auxiliary coil 70 are coupled to the flexible substrate 72. The second auxiliary coil 70 is formed as a curved coil by bending the flexible substrate 72 so that the planar coil 71 has a curved surface.

A wire 71A is spirally wound to form the planar coil 71 (refer to Fig. 7C). A center axis J12 of the planar coil 71 is orthogonal to a center axis J2 of a secondary coil 41 and a center axis J11 of a first auxiliary coil 45. The planar coil 71 is connected in series to the capacitor 73 by two ends of the wire 71A. The planar coil 71 and the capacitor 73 form a second resonance circuit.

The flexible substrate 72 is formed from a flexible resin material. The flexible substrate 72 is coupled to an inner circumferential surface of a main body case 33.

The capacitor 73 is located on the flexible substrate 72 at a portion in the downward direction ZB from the planar coil 71. The capacitance of the capacitor 73 is set so that the resonance frequency of the second resonance circuit becomes the reference frequency FK.

The contactless power transmission device 1 of the present embodiment has the following advantage in addition to advantages (1) to (3) and (5) to (8) of the contactless power transmission device 1 of the first embodiment.
(13) The second auxiliary coil 70 is formed as a curved coil, which follows the secondary coil 41. This structure limits an increase in the gap between the second auxiliary coil 70 and the secondary coil 41 as the center axis J12 becomes farther in the curving direction of the second auxiliary coil 70 compared to a hypothetical structure in which the second auxiliary coil 70 is a planar coil that is parallel to the XZ plane. This increases the coupling coefficient of the second auxiliary coil 70 and the secondary coil 41.

### Fifth Embodiment

Fig. 8 shows the structure of a fifth embodiment of the contactless power transmission device 1. As shown in Fig. 1, the contactless power transmission device 1 of the first embodiment includes the second auxiliary coil 47 and the capacitor 48. The contactless power transmission device 1 of the fifth embodiment includes a second auxiliary coil 81 and a capacitor 82. The differences between the first and fifth embodiments will now be described in detail. The same reference numerals are given to those components that are shared in the first and fifth embodiments. The description of such components will be entirely or partially omitted.

A main body case 33 of a device main body 31 accommodates a circuit board 80, a second auxiliary coil 81, and a capacitor 82 (refer to Fig. 8B).

The circuit board 80 is formed by a paper phenolic substrate. The circuit board 80 is flat and formed so that the longitudinal direction extends in the Z-direction. The main surface of the circuit board 80 is parallel to the XZ plane. The circuit board 80 is adjacent to a secondary coil 41 and a first auxiliary coil 45 in the XY plane. The circuit board 80 includes a rectification circuit 42 and a power supply controller 43 (refer to Fig. 8B). The circuit board 80 is electrically connected to a rechargeable battery 34.

As shown in Fig. 8B, the second auxiliary coil 81 is located on the circuit board 80 at a portion in the downward direction ZB from the rectification circuit 42. The second auxiliary coil 81 is not electrically connected to the rectification circuit 42 and the power supply controller 43. The second auxiliary coil 81 includes a conductive pattern on a left surface of the circuit board 80. The conductive pattern is formed by spirally winding a copper foil. Two ends of the conductive pattern of the second auxiliary coil 81 are connected to the capacitor 82 in series. The second auxiliary coil 81 and the capacitor 82 form a second resonance circuit. A center axis J12 of the second auxiliary coil 81 is orthogonal to a center axis J2 of the secondary coil 41 and a center axis J11 of the first auxiliary coil 45.

The capacitor 82 is located on the circuit board 80 between the second auxiliary coil 81 and the rectification circuit 42. The capacitance of the capacitor 82 is set so that the resonance frequency of the second resonance circuit becomes the reference frequency FK.

The contactless power transmission device 1 of the present embodiment has the following advantages in addition to advantages (1) to (8) of the contactless power transmission device 1 of the first embodiment.
(14) The second auxiliary coil 81 is formed by the conductive pattern formed on the circuit board 80. This structure decreases variations in the coil length of the second auxiliary coil 81 compared to a hypothetical structure in which the second auxiliary coil 81 is formed by spirally winding a wire. This decreases variations in the inductance value of the second auxiliary coil 81 in each product of the electric toothbrush 30.
(15) The capacitor 82 is coupled to the circuit board 80. This structure does not apply pressure to the capacitor 82 from the exterior when bending the circuit board 80 as compared to a hypothetical structure in which the capacitor 82 is coupled to a flexible substrate. Thus, changes are limited in the capacitance of the capacitor 82.
(16) The circuit board 80 includes the second auxiliary coil 81, the rectification circuit 42, and the power supply controller 43. This structure reduces the number of components of the electric toothbrush 30 compared to a hypothetical structure in which a circuit board on which the second auxiliary coil 81 is formed is separate from a circuit board on which the rectification circuit 42 and the power supply controller 43 are formed.

### Sixth Embodiment

Fig. 9 shows a structure of a sixth embodiment of the contactless power transmission device 1. As shown in Fig. 1, the contactless power transmission device 1 of the first embodiment includes the primary coil 24. The contactless power transmission device 1 of the sixth embodiment includes a primary coil 90. Also, a first relay coil 91, a second relay coil 92, and a third relay coil 93 are added to a washstand 10 of the contactless power transmission device 1. The differences between the first and sixth embodiments will now be described in detail. The same reference numerals are given to those components that are shared in the first and sixth embodiments. The description of such components will be entirely or partially omitted. In Fig. 9, the number of windings in each of the primary coil 90 and the relay coils 91 to 93 is less than the actual number of windings to simplify the shape of each of the primary coil 90 and the relay coils 91 to 93.

The primary coil 90 is located inside a left mirror portion 12 of the washstand 10. The first relay coil 91 includes a planar coil, which is tetragonal as viewed from the front of the washstand 10. Two ends of the first relay coil 91 are connected to a first relay capacitor (not shown). The first relay coil 91 and the first relay capacitor form a first relay resonance circuit. The capacitance of the first relay capacitor is set so that the resonance frequency of the first relay resonance circuit becomes the reference frequency FK.

The second relay coil 92 is located inside a sink 13 and a left side portion of a support board 15. The second relay coil 92 includes a planar coil, which extends along surfaces of the support board 15 and a peripheral portion of the sink 13. Two ends of the second relay coil 92 are connected to a second relay capacitor (not shown). The second relay coil 92 and the second relay capacitor form a second relay resonance circuit. The capacitance of the second relay capacitor is set so that the resonance frequency of the second relay resonance circuit becomes the reference frequency FK.

The second relay coil 92 is bent at a portion that connects the sink 13 and the support board 15. Therefore, in the second relay coil 92, the direction of the magnetic flux generated at a portion corresponding to the sink 13 differs from the direction of the magnetic flux generated at a portion corresponding to the support board 15.

The third relay coil 93 is located inside a right side portion of the support board 15 and the seat 14. The third relay coil 93 includes a planar coil, which extends along surfaces of the seat 14 and the support board 15. Two ends of the third relay coil 93 are connected to a third relay capacitor (not shown). The third relay coil 93 and the third relay capacitor form a third relay resonance circuit. The capacitance of the third relay capacitor is set so that the resonance frequency of the third relay resonance circuit becomes the reference frequency FK.

The third relay coil 93 is bent at a portion that connects the seat 14 and the support board 15. Therefore, in the third relay coil 93, the direction of the magnetic flux generated at a portion corresponding to the seat 14 differs from the direction of the magnetic flux generated at a portion corresponding to the support board 15.

The power supply operation of the contactless power transmission device 1 will now be described. In the power supply operation, the operation of supplying power to the primary coil 90 and the operation subsequent to a first auxiliary coil 45 (refer to Fig. 2) are the same as the power supply operation of the contactless power transmission device 1 of the first embodiment.
(D1) When supplied with alternating current power, the primary coil 90 generates alternating current magnetic flux.
(D2) The first and second relay coils 91 and 92 are interlinked with the alternating current magnetic flux of the primary coil 90 to generate alternating current power having the reference frequency FK and alternating current magnetic flux.
(D3) The third relay coil 93 interlinks the first and second relay coils 91 and 92 to generate alternating current power and alternating current magnetic flux at the reference frequency FK.
(D4) The first auxiliary coil 45 interlinks the alternating current magnetic flux of the third relay coil 93 to generate alternating current power and alternating current magnetic flux at the reference frequency FK.

The contactless power transmission device 1 of the present embodiment has the following advantage in addition to advantages (1) to (8) of the contactless power transmission device 1 of the first embodiment.
(15) The washstand 10 includes the first to third relay coils 91 to 93. In this structure, the first to third relay coils 91 to 93 relay the magnetic flux flowing from the primary coil 90 to the electric toothbrush 30. Thus, the transmission distance can be extended as compared to a hypothetical structure in which the magnetic flux of the primary coil 90 is directly interlinked with the first auxiliary coil 45 or the second auxiliary coil 47 (refer to Fig. 2).

The washstand 10 includes the first to third relay coils 91 to 93. This also extends the transmission distance compared to a hypothetical structure in which the washstand 10 includes one relay coil. Additionally, compared to such a structure, the washstand 10 has a large area to relay the magnetic flux flowing from the primary coil 90 to the first auxiliary coil 45 or the second auxiliary coil 47. Thus, even when the electric toothbrush 30 is located at a position other than the seat 14, for example, the peripheral portion of the sink 13, the washstand 10 transmits power to the electric toothbrush 30.

### Other Embodiments

Here, a contactless power transmission device includes embodiments that differ from the first to sixth embodiments. Modified examples of the first to sixth embodiments will now be described as other embodiments of the contactless power transmission device. The modified examples may be combined.

At least one of the second auxiliary coil 63 of the third embodiment, the second auxiliary coil 70 of the fourth embodiment, and the second auxiliary coil 81 of the fifth embodiment may be added to the electric toothbrush 30 of the first embodiment.

At least one of the second auxiliary coil 47 of the first embodiment, the second auxiliary coil 63 of the third embodiment, the second auxiliary coil 70 of the fourth embodiment, and the second auxiliary coil 81 of the fifth embodiment may be added to the electric toothbrush 30 of the second embodiment.

At least one of the second auxiliary coil 70 of the fourth embodiment and the second auxiliary coil 81 of the fifth embodiment may be added to the electric toothbrush 30 of the third embodiment.

The second auxiliary coil 81 of the fifth embodiment may be added to the electric toothbrush 30 of the fourth embodiment.

The electric toothbrush 30 of the sixth embodiment has the same structure as the electric toothbrush 30 of the first embodiment. However, a modified example of the electric toothbrush 30 has the same structure as the electric toothbrush 30 of the second to fifth embodiments.

The second and third auxiliary coils 55 and 57 of the second embodiment each include a coil, which is wound in one layer in the Z-direction. However, modified examples of the second and third auxiliary coils 55 and 57 each include a coil that is wound in two or more layers in the Z-direction.

One of the second and third auxiliary coils 55 and 57 may be omitted from the electric toothbrush 30 of the second embodiment. In this case, the projection corresponding to the omitted coil may be omitted from the core 50.

In the core 50 of the second embodiment, the center axis CJ2 of the right and left projections 53 and 54 is orthogonal to the center axis CJ1 of the upper projection 51. However, in a modified example of the core 50, the center axis CJ2 of the right and left projections 53 and 54 is neither orthogonal nor parallel to the center axis CJ1 of the upper projection 51. In the core 50 of the modified example, the center axis CJ2 of the right and left projections 53 and 54 only needs to have an inclined relationship or be located at a position skew to the center axis CJ1 of the upper projection 51.

The second and third auxiliary coils 55 and 57 in the electric toothbrush 30 of the second embodiment are coupled to the core 50. However, as shown in Fig. 10, a modified example of the electric toothbrush 30 includes a fourth auxiliary coil 110 and a fifth auxiliary coil 113, which are coupled to a core 100, in addition to the second and third auxiliary coils 55 and 57. The fourth and fifth auxiliary coils 110 and 113 correspond to "the second auxiliary coil".

The core 100 is formed by a magnetic material. The core 100 has the shape of a cross as viewed from the front and from the side. An upper projection 101, a lower projection 102, a right projection 103, a left projection 104, a front projection 105, and a rear projection 106 of the core 100 are integrally formed from the same material. In the core 100, a center axis CJ1 of the upper and lower projections 101 and 102 is orthogonal to a center axis CJ2 of the right and left projections 103 and 104 and a center axis CJ3 of the front and rear projections 105 and 106. In the core 100, the center axis CJ2 of the right and left projections 103 and 104 is orthogonal to the center axis CJ3 of the front and rear projections 105 and 106. The lower projection 102 corresponds to "the first projection". The right projection 103, the left projection 104, the front projection 105, and the rear projection 106 correspond to "the second projection".

A secondary coil 41 includes a wire 41 A, which is wound around the upper projection 101. A first auxiliary coil 45 includes a wire 45A, which is wound around the lower projection 102. The second auxiliary coil 55 includes a wire 55A, which is wound around the right projection 103. The third auxiliary coil 57 includes a wire 57A, which is wound around the left projection 104.

The fourth auxiliary coil 110 includes a wire 111, which is wound around the front projection 105. The fourth auxiliary coil 110 is not electrically connected to the secondary coil 41, the rectification circuit 42, the power supply controller 43, the first auxiliary coil 45, and the second auxiliary coil 47. A center axis J 14 of the fourth auxiliary coil 110 is orthogonal to a center axis J2 of the secondary coil 41, a center axis J11 of the first auxiliary coil 45, a center axis J12 of the second auxiliary coil 55, and a center axis J13 of the third auxiliary coil 57.

In the fourth auxiliary coil 110, two ends of the wire 111 are connected to a capacitor 112 in series. The fourth auxiliary coil 110 and the capacitor 112 form a fourth resonance circuit. The capacitor 112 is located in the downward direction ZB from the fourth auxiliary coil 110. The capacitance of the capacitor 112 is set so that the resonance frequency of the fourth resonance circuit becomes the reference frequency FK.

The fifth auxiliary coil 113 includes a wire 114, which is wound around the rear projection 106. The fifth auxiliary coil 113 is not electrically connected to the secondary coil 41, the rectification circuit 42, the power supply controller 43, the first auxiliary coil 45, the second auxiliary coil 47, and the fourth auxiliary coil 110. A center axis J15 of the fifth auxiliary coil 113 is orthogonal to the center axis J2 of the secondary coil 41, the center axis J11 of the first auxiliary coil 45, the center axis J12 of the second auxiliary coil 55, and the center axis J13 of the third auxiliary coil 57. The center axis J15 of the fifth auxiliary coil 113 is coaxial to the center axis J14 of the fourth auxiliary coil 110.

A capacitor 115 is connected in series to two ends of the wire 114 of the fifth auxiliary coil 113. The fifth auxiliary coil 113 and the capacitor 115 form a fifth resonance circuit. The capacitor 115 is located in the downward direction ZB from the fifth auxiliary coil 113. The capacitance of the capacitor 115 is set so that the resonance frequency of the fifth resonance circuit becomes the reference frequency FK.

In the structure of the electric toothbrush 30 of the modified example, the magnetic flux and the power of each auxiliary coil 110 and 113, which are generated when the magnetic flux of the primary coil 24 is interlinked with each auxiliary coil 110 and 113, are large compared to a hypothetical structure in which the fourth and fifth auxiliary coils 110 and 113 are electrically connected to the rectification circuit 42 and the power supply controller 43 (refer to Fig. 5). Thus, when the magnetic flux of each auxiliary coil 110 and 113 is interlinked with the secondary coil 41, the secondary coil 41 generates a large current. This allows the contactless power transmission device 1 of the modified example to extend the transmission distance.

The electric toothbrush 30 of the modified example includes the fourth auxiliary coil 110 and the fifth auxiliary coil 113. This also allows the electric toothbrush 30 to be supplied with power through the primary coil 24 regardless of the direction in which the electric toothbrush 30 is arranged relative to the seat 14. Thus, the degree of freedom may be increased for the direction in which the electric toothbrush 30 is arranged relative to the seat 14.

The electric toothbrush 30 of the second embodiment includes the core 50. However, a modified example of the electric toothbrush 30 does not include the core 50.

In the electric toothbrush 30 of the second embodiment, the core 50 is located in the hollow portion 41B of the secondary coil 41, the hollow portion 45B of the first auxiliary coil 45, the hollow portion 55B of the second auxiliary coil 55, and the hollow portion 57B of the third auxiliary coil 57. However, in a modified example of the electric toothbrush 30, the core 50 is not located in one to three of the hollow portions 41B, 45B, 55B, and 57B of the coils 41, 45, 55, and 57.

The second auxiliary coil 63 of the third embodiment contacts the upper surface of the first auxiliary coil 61. However, a modified example of the second auxiliary coil 63 does not contact the first auxiliary coil 61.

The second auxiliary coil 70 of the fourth embodiment includes the planar coil 71, which is formed by spirally winding the wire 71A. However, a modified example of the second auxiliary coil 70 includes a planar coil that is formed by spirally winding a conductive pattern of a copper foil.

The circuit board 80 of the fifth embodiment is formed by a paper phenolic substrate. However, a modified example of the circuit board 80 is formed by a glass-epoxy substrate. The circuit board 80 only needs to be formed by a rigid substrate material.

The first auxiliary coil 45 of the fifth embodiment is formed at a location separate from the circuit board 80. However, a modified example of the first auxiliary coil 45 is formed on the circuit board 80. The circuit board 80 of the modified example includes a portion that is parallel to the XY plane at a lower end portion. The first auxiliary coil 45 of the modified example has a structure in which a conductive pattern of a copper foil is formed on the circuit board 80 of the modified example at the portion parallel to the XY plane.

The second auxiliary coil 81 of the fifth embodiment is formed on the circuit board 80. However, a modified example of the second auxiliary coil 81 is formed on a location separate from the circuit board 80. The second auxiliary coil 81 of the modified example includes, for example, a planar coil formed by spirally winding a wire.

The first to third relay coils 91 to 93 of the sixth embodiment is located in the washstand 10. However, modified examples of the first to third relay coils 91 to 93 have a structure in which at least one of the coils 91 to 93 is independent from the washstand 10. In this case, the relay coil that is independent from the washstand 10 is movable relative to the washstand 10.

The washstand 10 of the sixth embodiment includes the first to third relay coils 91 to 93. However, a modified example of the washstand 10 is configured to omit one of the first and second relay coils 91 and 92 from the first to third relay coils 91 to 93.

In the first, and fourth to sixth embodiments, the lower end portion of the secondary coil 41 contacts the upper end portion of the first auxiliary coil 45. However, in a modified example, the lower end portion of the secondary coil 41 does not contact the upper end portion of the first auxiliary coil 45. The secondary coil 41 of the modified example is located to be separate from the first auxiliary coil 45 in the Z-direction.

In the first, second, and fourth to sixth embodiments, the secondary coil 41 is coaxial to the first auxiliary coil 45. However, in a modified example, the center axis of the secondary coil 41 is parallel to the center axis of the first auxiliary coil 45.

In the first, second, and fourth to sixth embodiments, the outer diameter of the first auxiliary coil 45 is larger than that of the secondary coil 41. However, in a modified example, the outer diameter of the first auxiliary coil 45 is smaller than or equal to that of the secondary coil 41.

In the first, and fourth to sixth embodiments, the electric toothbrush 30 includes the core 37. However, a modified example of the electric toothbrush 30 does not include the core 37.

In the electric toothbrushes 30 of the first, and fourth to sixth embodiments, the core 37 is located in the hollow portion 41B of the secondary coil 41 and the hollow portion 45B of the first auxiliary coil 45. However, in a modified example of the electric toothbrush 30, the core 37 is located in the hollow portion 41B of the secondary coil 41 and is not located in the hollow portion 45B of the first auxiliary coil 45. In another modified example of the electric toothbrush 30, the core 37 is located in the hollow portion 45B of the first auxiliary coil 45 and is not located in the hollow portion 41 B of the secondary coil 41.

The second auxiliary coil 47 of the first embodiment is circular as viewed from the front. However, a modified example of the second auxiliary coil 47 is triangular, tetragonal, or elliptical as viewed from the front.

The second auxiliary coils 63 and 81 of the third and fifth embodiments are tetragonal as viewed from the front. However, modified examples of the second auxiliary coils 63 and 81 are triangular, tetragonal, or elliptical as viewed from the front.

The planar coil 71 of the second auxiliary coil 70 of the fourth embodiment is elliptical as viewed from the front. However, a modified example of the planar coil 71 is triangular, tetragonal, or elliptical as viewed from the front.

In the first, and fourth to sixth embodiments, the second auxiliary coil 47 does not include a core formed by a magnetic material in the hollow portion 47B. However, a modified example of the second auxiliary coil 47 includes a core formed by a magnetic material in a hollow portion 47B of the second auxiliary coil 47.

In the first, second, fourth to sixth embodiments, the secondary coil 41 and the first auxiliary coil 45 are circular as viewed from above. However, modified examples of the secondary coil 41 and the first auxiliary coil 45 have the following shapes.
(a1) The secondary coil 41 is circular as viewed from above. The first auxiliary coil 45 is triangular, tetragonal, or elliptical as viewed from above.
(a2) The secondary coil 41 is triangular, tetragonal, or elliptical as viewed from above. The first auxiliary coil 45 is circular as viewed from above.
(a3) The secondary coil 41 and the first auxiliary coil 45 are triangular, tetragonal, or elliptical as viewed from above.

In the second and third embodiments, the secondary coils 41 and 60 and the first auxiliary coils 45 and 61 are tetragonal and include rounded corners as viewed from above. However, in a modified example, the secondary coils 41 and 60 and the first auxiliary coils 45 and 61 have the following shapes.
(b1) The secondary coils 41 and 60 are tetragonal and include rounded corners as viewed from above. The first auxiliary coils 45 and 61 are circular, triangular, or elliptical as viewed from above.
(b2) The secondary coils 41 and 60 are circular, triangular, or elliptical as viewed from above. The first auxiliary coils 45 and 61 are tetragonal and include rounded corners as viewed from above.
(b3) The secondary coils 41 and 60 and the first auxiliary coils 45 and 61 are circular, triangular, or elliptical as viewed from above.

In the first, and third to fifth embodiments, the electric toothbrush 30 may include at least a plurality of the first auxiliary coils 45 and 61 or a plurality of the second auxiliary coils 47, 63, 70, and 81.

In the electric toothbrushes 30 of the first to sixth embodiments, the center axis J11 of the first auxiliary coils 45 and 61 is coaxial to the center axis J2 of the secondary coils 41 and 60. However, in a modified example of the electric toothbrush 30, the center axis J12 of the second auxiliary coils 47, 63, 70, and 81 is coaxial to the center axis J2 of the secondary coils 41 and 60.

In the first to sixth embodiments, the center axis of the second auxiliary coils 47, 55, 70, and 81 is orthogonal to the center axis of the secondary coil 41 and 60. However, in a modified example, the center axis of the second auxiliary coils 47, 55, 70 and 81 is neither orthogonal nor parallel to the center axis of the secondary coils 41 and 60. The center axis of the second auxiliary coils 47, 55, 70 and 81 only needs to be located at a position inclined or skew relative to the center axis of the secondary coils 41 and 60.

In the first to sixth embodiments, the first auxiliary coils 45 and 61 and the second auxiliary coils 47, 55, 70, and 81 are not electrically connected to the rectification circuit 42 and the power supply controller 43. However, in a modified example, the first auxiliary coils 45 and 61 and the second auxiliary coils 47, 55, 70, and 81 are electrically connected to the rectification circuit 42 and the power supply controller 43.

In the first to sixth embodiments, the washstand 10 includes the right and left mirror portions 11 and 12. However, as shown in Fig. 12, a washstand 120 of a modified example includes a cabinet 121, a central door 122, a right door 123, and a left door 124 instead of the right and left mirror portions 11 and 12. Each door 122 to 124 includes a mirror at the front.

In the first to sixth embodiments, the washstand 10 includes one primary coil 24. However, as shown in Fig. 11, the washstand 120 of the modified example includes a plurality of primary coils and a plurality of relay coils.

As shown in Fig. 11B, the cabinet 121 is formed from a nonconductive resin material. The cabinet 121 accommodates an oral or facial care device, such as the electric toothbrush 30, and the like. The cabinet 121 includes a first coil 130, which serves as a primary coil, a first capacitor (not shown), a first relay coil 131, a first relay capacitor (not shown), a second relay coil 132, and a second relay capacitor (not shown).

The first coil 130 is connected to the first capacitor in series. The first coil 130 and the first capacitor form a first resonance circuit. The capacitance of the first capacitor is set so that the resonance frequency of the first resonance circuit becomes the reference frequency FK.

The first relay coil 131 is connected to the first relay capacitor in series. The first relay coil 131 and the first relay capacitor form a first relay resonance circuit. The capacitance of the first relay capacitor is set so that the resonance frequency of the first relay resonance circuit becomes the reference frequency FK.

The second relay coil 132 is connected to the second relay capacitor in series. The second relay coil 132 and the second relay capacitor form a second relay resonance circuit. The capacitance of the second relay capacitor is set so that the resonance frequency of the second relay resonance circuit becomes the reference frequency FK.

As shown in Fig. 11A, the central door 122 is located in a central portion of the cabinet 121 in the Y-direction. The central door 122 is coupled to the cabinet 121 and can be opened and closed relative to the cabinet 121. The central door 122 opens and closes the central portion of the cabinet 121. The central door 122 includes a second coil 133, which functions as a primary coil, and a second capacitor (not shown).

The second coil 133 is connected to the second capacitor in series. The second coil 133 and the second capacitor form a second resonance circuit. The capacitance of the second capacitor is set so that the resonance frequency of the second resonance circuit becomes the reference frequency FK.

The right door 123 is coupled to the cabinet 121 and can be opened and closed relative to the cabinet 121. The right door 123 opens and closes a right side portion of the cabinet 121. The right door 123 includes a third coil 134, which functions as a primary coil, and a third capacitor (not shown).

The third coil 134 is connected to the third capacitor in series. The third coil 134 and the third capacitor form a third resonance circuit. The capacitance of the third capacitor is set so that the resonance frequency of the third resonance circuit becomes the reference frequency FK.

The left door 124 is coupled to the cabinet 121 and can be opened and closed relative to the cabinet 121. The left door 124 opens and closes a left side portion of the cabinet 121. The left door 124 includes a fourth coil 135, which serves as a primary coil, a fourth capacitor (not shown), a third relay coil 136, and a third relay capacitor (not shown).

The fourth coil 135 is connected to the fourth capacitor in series. The fourth coil 135 and the fourth capacitor form a fourth resonance circuit. The capacitance of the fourth capacitor is set so that the resonance frequency of the fourth resonance circuit becomes the reference frequency FK.

The third relay coil 136 is connected to the third relay capacitor in series. The third relay coil 136 and the third relay capacitor form a third relay resonance circuit. The capacitance of the third relay capacitor is set so that the resonance frequency of the third relay resonance circuit becomes the reference frequency FK.

The contactless power transmission device may be applied to a power transmitter other than the washstand 10 that is illustrated in the first to sixth embodiments. Other power transmitters may be a kitchen, a charger, and the like.

The contactless power transmission device may be applied to a power receiver other than the electric toothbrush 30 that is illustrated in the first to sixth embodiments. Other power receivers are, for example, an electric shaver, a nasal hair cutter, a dryer, and the like. When the power transmitter is a charger, the power receiver may be, for example, a digital camera, potable game player, a cell phone, or the like.

## Claims

1. A contactless power transmission device comprising:
a power transmitter that includes a primary coil; and
a power receiver that includes a secondary coil and a power supply circuit electrically connected to the secondary coil, wherein
the power receiver includes
a first auxiliary coil that relays magnetic flux flowing from the primary coil to the secondary coil, and
a second auxiliary coil that is separate from the first auxiliary coil and relays magnetic flux flowing from the primary coil to the secondary coil, wherein
the second auxiliary coil is located where a center axis of the second auxiliary coil is inclined relative to a center axis of the first auxiliary coil or skew relative to the center axis of the first auxiliary coil.

2. The contactless power transmission device according to claim 1, wherein
the first auxiliary coil is not electrically connected to the secondary coil and the power supply circuit, and
the second auxiliary coil is not electrically connected to the secondary coil, the power supply circuit, and the first auxiliary coil.

3. The contactless power transmission device according to claim 1 or 2, wherein
at least one of the secondary coil, the first auxiliary coil, and the second auxiliary coil includes a hollow portion and a core that is located in the hollow portion and formed by a magnetic material.

4. The contactless power transmission device according to claim 3, wherein
one of the first auxiliary coil and the second auxiliary coil includes a wire that is wound around the core, and
the other of the first auxiliary coil and the second auxiliary coil includes a planar coil.

5. The contactless power transmission device according to claim 3, wherein
the core includes
a first projection, and
a second projection having a center axis located at a position that is inclined relative to a center axis of the first projection or skew relative to the center axis of the first projection,
the first auxiliary coil includes a first wire that is wound around the first projection, and
the second auxiliary coil includes a second wire that is wound around the second projection.

6. The contactless power transmission device according to claim 3, wherein the core includes
a central portion,
a first projection formed extending from the central portion, and
a second projection formed extending from the central portion to have a center axis that is deviated from an axis parallel to a center axis of the first projection.

7. The contactless power transmission device according to any one of claims 1 to 3, wherein the first auxiliary coil and the second auxiliary coil include planar coils.

8. The contactless power transmission device according to any one of claims 1 to 3, wherein at least one of the first auxiliary coil and the second auxiliary coil includes a curved coil that is formed by bending a planar coil to have a curved surface.

9. The contactless power transmission device according to claim 1 or 2, wherein at least one of the first auxiliary coil and the second auxiliary coil includes a conductive pattern that is formed on a circuit board.

10. The contactless power transmission device according to claim 9, wherein the power supply circuit is formed on the circuit board.

11. The contactless power transmission device according to any one of claims 1 to 10, wherein one of a center axis of the first auxiliary coil and a center axis of the second auxiliary coil is coaxial to a center axis of the secondary coil.
